# DEMANDE DE BREVET EUROPEEN

(11) **EP 0 539 248 A1**
(43) Date de publication de la demande: **28.04.1993**
(21) Numéro de dépôt: 92402556.2
(22) Date de dépôt: 17.09.1992
(51) Int. Cl.: B60S 1/34

(54) **Essuie-glace de véhicule comportant des moyens commandés pour faire varier la pression d'essuyage**

(30) Priorité: 24.09.1991 FR 9111721
(71) Demandeur: VALEO SYSTEMES D'ESSUYAGE, 78180 Montigny-Le-Bretonneux (FR)
(72) Inventeur: Eustache, Jean-Pierre, F-92160 Antony (FR); Journée, Maurice, F-60240 Reilly (FR)
(74) Mandataire: Gamonal, Didier

(57) **Abrégé**

L'invention propose un essuie-glace, notamment de véhicule automobile, du type comportant un bras d'essuie-glace (12) qui porte au moins un balai d'essuyage et qui est monté articulé, autour d'un axe d'articulation (X-X), sur une tête d'entrâinement (20) du bras d'essuie-glace (12), et des moyens (26, 36, 38) agencés entre la tête d'entrâinement (20) et le bras d'essuie-glace (12) pour appliquer à ce dernier un couple d'essuyage et qui comportent au moins un ressort (26) qui applique au bras d'essuie-glace (12) un couple nominal d'essuyage sensiblement constant, lesdits moyens comportant un dispositif (36, 38) pour appliquer au bras d'essuie-glace (12) un couple complémentaire dont la valeur algébrique est réglable de manière à pouvoir augmenter ou réduire la valeur du couple d'essuyage en fonction d'au moins un paramètre de fonctionnement du véhicule, le dispositif d'application du couple complémentaire comportant un actionneur (36) associé à la tête d'entrâinement (20) et une pièce de liaison (38) reliant l'actionneur (36) au bras d'essuie-glace (12).

## Description

La présente invention est relative à un essuie-glace , notamment de véhicule automobile.

L'invention concerne plus particulièrement un dispositif d'essuie-glace du type comportant un bras d'essuie-glace qui porte au moins un balai d'essuyage, par exemple par l'intermédiaire d'un porte-balai et qui est monté articulé, autour d'un axe d'articulation, sur une tête d'entraînement de l'essuie-glace qui est soumise à un mouvement de rotation alternatif par un arbre d'essuyage qui permet d'obtenir un balayage de la vitre à essuyer.

Le bras d'essuie-glace porte, par l'intermédiaire du porte-balai un balai d'essuyage articulé qui est apte à essuyer la surface vitrée telle que par exemple un pare-brise de véhicule automobile.

Afin d'obtenir un essuyage correct de la surface vitrée, il est nécessaire que la lame d'essuyage de l'essuie-glace soit appliquée sur la surface vitrée à essuyer avec une force de pression, ou force d'essuyage, importante.

A cet effet, il est généralement prévu au moins un ressort, par exemple un ressort hélicoïdal de traction, qui est disposé entre la tête d'entraînement et le reste du bras d'essuie-glace qui applique en fait un couple nominal d'essuyage sensiblement constant au bras d'essuie-glace, autour de son axe d'articulation, de manière à venir plaquer la lame d'essuyage contre la vitre.

Du fait de la conception de ce dispositif, la lame est appuyée pendant le mouvement de balayage de la surface vitrée, mais également en position de repos du dispositif d'essuie-glace.

Du fait de la permanence de l'effort nominal d'essuyage qui est appliqué à la lame lorsque le dispositif d'essuie-glace est au repos, on constate que la lame conserve une forme résiduelle résultant de l'écrasement de son profil contre la surface vitrée et la lame ne procure plus alors un essuyage convenable de la surface vitrée.

Il est donc souhaitable de pouvoir réduire l'effort nominal d'essuyage appliqué à la lame lorsque l'essuie-glace est au repos.

Par ailleurs, la qualité d'essuyage de la surface vitrée dépend, en fonctionnement, de la maîtrise de l'effort d'essuyage qui est appliqué à la lame, et ceci notamment en fonction de la vitesse de déplacement du véhicule et en fonction de la fréquence du mouvement de balayage de l'essuie-glace.

Il est également connu d'augmenter la force d'essuyage au moyen d'appendices aérodynamiques montés sur le bras d'essuie-glace mais ces dispositifs ne permettent pas de maîtriser avec précision la valeur de la force d'essuyage et ne permettent notamment pas de la faire varier de manière contrôlée en fonction d'un paramètre de fonctionnement du véhicule.

Afin de remédier aux inconvénients qui viennent d'être mentionnés, la présente invention propose un essuie-glace du type mentionné précédemment dans lequel des moyens agencés entre la tête d'entraînement et le bras d'essuie-glace pour appliquer à ce dernier un couple d'essuyage, comporte au moins un ressort qui applique au bras un couple nominal d'essuyage sensiblement constant, caractérisé en ce que ces moyens comportent un dispositif pour appliquer au bras un couple complémentaire dont la valeur algébrique est réglable de manière à pouvoir augmenter ou réduire la valeur du couple d'essuyage en fonction d'au moins un paramètre de fonctionnement du véhicule et en ce que le dispositif d'application du couple complémentaire comporte un actionneur associé à la tête d'entraînement et une pièce de liaison qui relie l'actionneur au bras d'essuie-glace.

Selon d'autres caractéristiques de l'invention :
- la pièce de liaison comporte une patte dont une extrémité est reliée à l'actionneur de manière à solliciter le bras d'essuie-glace en rotation autour de son axe d'articulation ;
- l'actionneur comporte une tige de sortie coulissante qui s'étend selon une direction sensiblement perpendiculaire à l'axe d'articulation du bras d'essuie-glace , ladite tige de sortie présentant une extrémité libre comportant deux surfaces opposées qui s'étendent dans des plans perpendiculaires à la tige de sortie et entre lesquelles est reçue l'extrémité de la patte ;
- l'extrémité est reçue avec jeu entre les deux surfaces ;
- la patte constitue la première branche d'une pièce de liaison en forme générale de L dont la seconde branche est fixée au bras d'essuie-glace ;
- la patte est déformable élastiquement ;
- la patte est à l'état neutre lorsque la valeur du couple complémentaire est nulle ;
- la pièce de liaison est déformable élastiquement dans la zone de raccordement des deux branches de manière à constituer une zone d'articulation de la patte autour d'un axe sensiblement parallèle à l'axe d'articulation du bras d'essuie-glace ;
- l'actionneur est un moteur linéaire par exemple du type à vis.

D'autres caractéristiques et avantages de l'invention apparaîtront à la lecture de la description détaillée qui va suivre pour la compréhension de laquelle on se reportera aux dessins annexés qui illustrent un mode de réalisation de l'invention donné à titre non limitatif et dans lesquels :
- La figure 1 est une vue en coupe transversale partielle d'un dispositif d'essuie-glace réalisé conformément aux enseignements de l'invention ;
- la figure 2 est une vue de dessus, avec arrachement partiel, du dispositif illustré à la figure 1 ;
- la figure 3 est une vue à échelle réduite identique à celle de la figure 1 ; et
- les figures 4 et 5 sont des vues similaires à celle de la figure 3 qui illustrent deux autres positions de fonctionnement du dispositif permettant d'appliquer un couple complémentaire et correspondant à deux valeurs extrêmes opposées de ce couple.

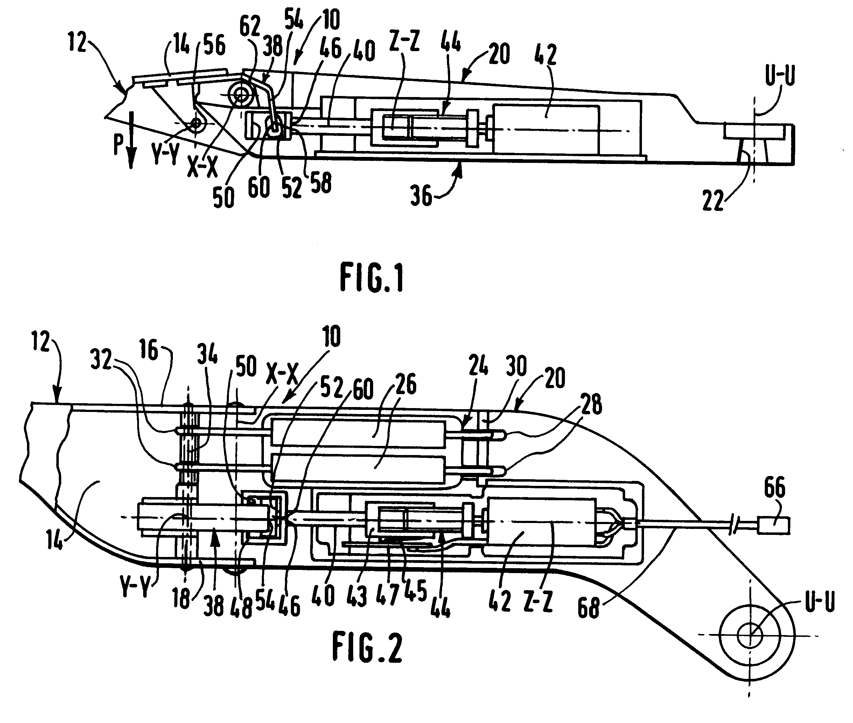

Le dispositif d'essuie-glace 10 illustré aux figures 1 et 2 comporte un bras d'essuie-glace 12 formant porte-balai dont la portion illustrée sur les figures se présente sous la forme d'un profilé creux en U inversé constitué par un dos 14 et par deux flancs ou joues latérales perpendiculaires 16 et 18.

Le bras d'essuie-glace 12 est articulé sur une tête d'entraînement 20 autour d'un axe géométrique X-X qui s'étend selon une direction sensiblement perpendiculaire à la direction générale du bras d'essuie-glace.

La tête d'entraînement 20 comporte, à son extrémité opposée à l'axe d'articulation X-X, un alésage 22 d'axe U-U perpendiculaire à l'axe X-X d'articulation qui est prévu pour recevoir un arbre d'essuyage (non représenté) qui permet d'entraîner en rotation la tête d'entraînement 20 en un mouvement alternatif par tout moyen tel qu'un moteur d'essuyage (non représenté).

Selon une technique connue, le dispositif d'essuie-glace 10 comporte des moyens 24 qui permettent d'appliquer au bras d'essuyage 12 un effort ou pression d'essuyage P, de valeur sensiblement constante, et orienté en direction de la surface à essuyer (non représentée).

Le dispositif 24 est ici constitué de deux ressorts hélicoïdaux 26 de traction agencés en parallèle dont deux extrémités 28 sont accrochées sur une tige transversale 30 de la tête d'entraînement 20 et dont les deux extrémités opposées 32 sont accrochées sur une tige transversale 34 d'axe géométrique Y-Y parallèle à l'axe d'articulation X-X.

Comme on peut le voir à la figure 1, l'axe Y-Y est situé en-dessous de l'axe X-X, c'est-à-dire entre ce dernier et la surface à essuyer de manière que les ressorts 26 appliquent un couple nominal au balai 12 autour de son axe X-X dont il résulte une pression d'essuyage P appliquée à la lame d'essuyage (non représentée).

Conformément à l'invention, le dispositif d'essuie-glace 10 comporte des moyens pour appliquer au bras d'essuie-glace 12 un couple complémentaire qui permet de faire varier la valeur de la pression d'essuyage P.

Ces moyens sont pour l'essentiel constitués par un actionneur 36 agencé dans la tête d'entraînement 20 et par une pièce de liaison 38 qui relie la tige de sortie 40 de l'actionneur 36 au bras d'essuie-glace 12.

Dans le mode de réalisation illustré aux figures, l'actionneur 36 est du type linéaire et sa direction générale d'actionnement Z-Z s'étend selon une direction sensiblement perpendiculaire à l'axe d'articulation X-X du bras 12 sur la tête d'entraînement 20.

L'actionneur 36 comporte un moteur électrique tournant 42 qui est relié à la tige de sortie 40 par un dispositif de liaison du type vis-écrou 44 qui convertit le mouvement de rotation du moteur 42 en un coulissement de la tige de sortie 40 selon la direction Z-Z.

Le moteur 42 peut être commandé dans les deux sens de rotation de façon à pouvoir provoquer des déplacements opposés de la tige de sortie 40.

L'extrémité libre 46 de la tige de sortie 40 tournée vers le bras d'essuie-glace 12 comporte un étrier 48 qui délimite deux surfaces opposées et parallèles 50 et 52.

Les deux surfaces 50 et 52 s'étendent parallèlement à un plan commun perpendiculaire à la direction d'actionnement Z-Z.

La pièce de liaison 38 est une pièce présentant sensiblement la forme d'un L, comme on peut le voir à la figure 1, constituée de deux branches 54 et 56.

La seconde branche 56, qui est la branche supérieure si l'on considère la figure 1, s'étend sensiblement horizontalement et est fixée contre la face interne du dos 14 du balai d'essuie-glace, par exemple par soudage.

La première branche 54 de la pièce de liaison 38 s'étend selon une direction sensiblement perpendiculaire, c'est-à-dire verticalement vers le bas en considérant la figure 1, de manière que son extrémité libre 58 soit reçue entre les deux surfaces d'entraînement 50 et 52 de l'étrier 48.

Pour coopérer avec ces surfaces d'entraînement, l'extrémité 58 de la branche 54 comporte un patin d'entraînement 60 qui est par exemple réalisé dans un matériau à faible coefficient de friction.

La pièce de liaison en forme de L est par exemple réalisée en métal et est déformable élastiquement, comme cela sera expliqué plus avant, sous l'effet des sollicitations qui peuvent lui être appliquées par les surfaces 50 et 52.

Cette déformabilité de la pièce 38 a pour effet de constituer une zone d'articulation déformable élastiquement 62 qui relie entre elles les branches 54 et 56.

La branche 54 constitue une patte d'entraînement en rotation du bras 12 autour de l'axe X-X dans l'un ou l'autre sens de rotation de manière à pouvoir appliquer à celui-ci un couple complémentaire dont la valeur vient s'ajouter, ou se retrancher, au couple nominal d'essuyage qui est appliqué au bras 12 par les ressorts 26.

Les moyens 36 et 38 sont illustrés aux figures 1 à 3 dans leur position de repos, c'est-à-dire dans une position dans laquelle ils n'appliquent aucun couple complémentaire au bras 12.

A cet effet, et comme on peut le voir notamment à la figure 1, l'extrémité 58 munie de son patin 60 est reçue avec jeu entre les surfaces d'entraînement 50 et 52.

Cette position de repos correspond également à l'état neutre, du point de vue de sa déformabilité élastique, de la pièce de liaison 38.

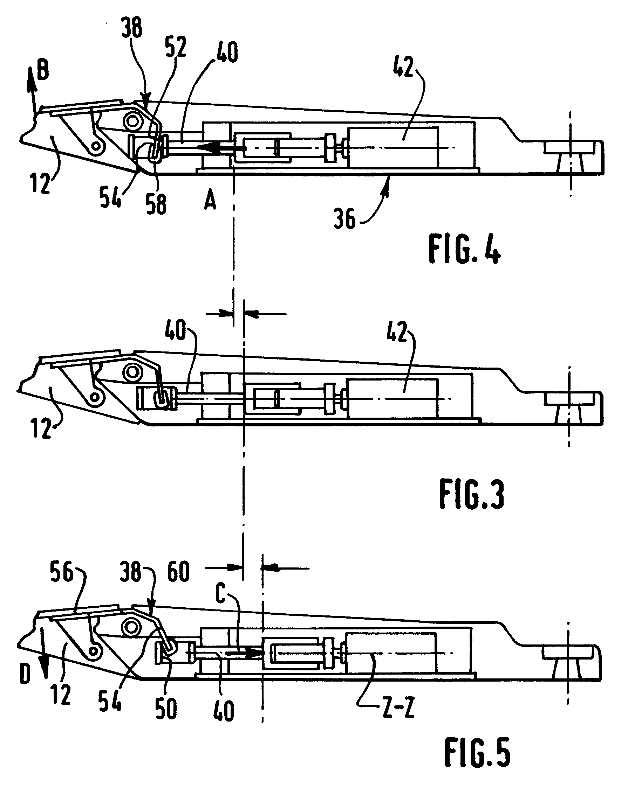

On décrira maintenant le fonctionnement du dispositif en se référant aux figures 3 à 5.

Dans la position illustrée à la figure 3, qui correspond à la figure 1, le bras 12 n'est soumis qu'au couple nominal d'essuyage résultant de l'action des ressorts 26.

Si l'on désire réduire la valeur du couple total d'essuyage appliqué au bras 12, et donc la valeur de l'effort d'essuyage P, des moyens de commande (non illustrés) du moteur 42 provoquent la rotation de celui-ci dans un premier sens de façon à provoquer un déplacement de la tige de sortie 40 selon la flèche A indiquée à la figure 4.

Du fait de ce déplacement, vers la gauche en considérant les figures, la surface d'entraînement 52 vient coopérer avec la portion en vis-à-vis du patin 58 ce qui provoque la mise sous contrainte de la pièce de liaison 38 par l'intermédiaire de sa branche 54.

L'effort ainsi appliqué en permanence sur la pièce 38 par l'actionneur 36 se traduit sous la forme d'un couple complémentaire appliqué au bras 12 qui est de sens opposé au couple nominal appliqué par les ressorts 26 et qui tend donc à le soulever selon la direction indiquée par la flèche B de la figure 4 et donc à réduire le couple total appliqué au bras 12 en direction de la surface à essuyer.

Lorsque l'on désire augmenter la valeur du couple total, il suffit de commander le moteur 42 dans le sens de rotation inverse de manière à provoquer un déplacement selon la direction Z-Z de la tige de sortie 40 dans l'autre sens.

En effet, ce déplacement selon la flèche C de la figure 5 provoque la coopération de la surface d'entraînement 50 avec le patin 60 et donc la mise sous contrainte de la pièce 38 dans l'autre sens, c'est-à-dire dans le sens correspondant à "l'ouverture" des branches du L.

Cette mise sous contrainte a pour effet d'appliquer au bras 12 un couple complémentaire qui vient s'ajouter au couple nominal appliqué par les ressorts 26 qui sollicite davantage le bras 12 dans le sens indiqué par la flèche D de la figure 5 et dont il résulte un accroissement de la force d'essuyage P.

Afin de commander les déplacements de la tige 40, il est possible de munir l'écrou 43 du système vis-écrou 44 d'un contact glissant 45 qui coopère avec la piste en vis-à-vis d'un potentiomètre linéaire 47.

Le potentiomètre 47 et le moteur 42 sont reliés à des moyens de commande 66 par un faisceau de raccordement 68.

Les moyens de commande 66, sont par exemple des moyens de commande électronique qui ont pour fonction de faire varier le couple complémentaire en fonction d'au moins un paramètre de fonctionnement du véhicule;

La loi de commande appliquée à l'actionneur 36 a par exemple pour première fonction de réduire la valeur de l'effort d'essuyage lorsque l'essuie-glace est à l'arrêt, c'est-à-dire lorsque la lame d'essuyage est dans sa position de repos et qu'il n'y a pas de balayage de la surface vitrée.

Les moyens de commande peuvent également faire varier la valeur de la pression d'essuyage en cours de fonctionnement de l'essuie-glace, c'est-à-dire au cours du balayage de la surface vitrée.

A cet effet, la loi de commande peut par exemple prévoir que le couple complémentaire est nul pour un fonctionnement normal de l'essuie-glace, c'est-à-dire que la pression d'essuyage dépend alors du couple nominal résultant de l'action des ressorts 26 et des phénomènes aérodynamiques et de frottement.

La loi peut également prévoir d'accroître la valeur de l'effort d'essuyage P en appliquant un couple complémentaire qui vient s'ajouter au couple nominal par exemple lorsque la vitesse du véhicule dépasse une pression déterminée.

La loi de commande de l'actionneur 36 n'est toutefois pas limitée à ces différents modes de fonctionnement.

Il est par exemple possible d'accroître la valeur de la pression d'essuyage P, pour une vitesse relativement faible du véhicule mais dans une phase correspondant à un lavage de la surface vitrée.

De même, il est possible de faire varier la pression d'essuyage P en fonction de la fréquence et/ou de la vitesse de balayage de l'essuie-glace.

L'invention n'est pas limitée au mode de réalisation qui vient d'être décrit.

Il est par exemple possible d'utiliser tous types d'actionneurs linéaires en lieu et place du moteur 42 et du dispositif vis-écrou 44.

De même, il est possible d'utiliser un actionneur rotatif qui agirait directement sur l'articulation du bras 12 sur la tête d'entraînement 20.

De même, il est possible d'agir sur une pièce de liaison, du type de la pièce 38, par un système à came permettant d'obtenir une loi de variation du couple complémentaire différente en fonction de la came adoptée.

De même la conversion du mouvement de rotation du moteur 42 en un déplacement de l'extrémité 58 de la branche 54 selon la direction Z-Z peut être effectuée par tout moyen approprié, tel qu'un renvoi par levier.

La valeur du couple complémentaire appliquée au moyen de l'actionneur 36 et de la pièce de liaison 38 peut être telle qu'elle aboutisse par exemple à annuler complètement la valeur du couple nominal.

Toutefois, dans les principales applications, la valeur absolue du couple complémentaire correspond à une proportion, par exemple de 25 %, du couple nominal appliqué par les ressorts 26.

On remarquera que l'utilisation de moyens complémentaires, c'est-à-dire indépendants des ressorts 26, a pour conséquence avantageuse de ne pas soumettre ces derniers à des variations importantes de leur tension et qu'ils peuvent donc être calculés et conçus pour une valeur sensiblement constante de l'effort de traction qu'ils appliquent et posséder ainsi une grande fiabilité.

Le fait d'appliquer un couple complémentaire ne correspondant qu'à une proportion du couple nominal permet également, en cas de panne de l'actionneur 36 dans l'une quelconque de ses positions, de conserver une pression d'essuyage permettant à l'essuie-glace de fonctionner.

De plus, il peut être envisagé que la patte 54 ne soit pas déformable élastiquement et que la pièce de liaison 38 soit élaborée en tant que deux branches 54,56 rigides l'une par rapport à l'autre.

## Revendications

1. Essuie-glace, notamment de véhicule automobile, du type comportant un bras d'essuie-glace (12) qui porte au moins un balai d'essuyage et qui est monté articulé, autour d'un axe d'articulation (X-X), sur une tête d'entraînement (20) du bras d'essuie-glace (12), et des moyens (26, 36, 38) agencés entre la tête d'entraînement (20) et le bras d'essuie-glace (12) pour appliquer à ce dernier un couple d'essuyage et qui comportent au moins un ressort (26) qui applique au bras d'essuie-glace (12) un couple nominal d'essuyage sensiblement constant, caractérisé en ce que lesdits moyens comportent un dispositif (36, 38) pour appliquer au bras d'essuie-glace (12) un couple complémentaire dont la valeur algébrique est réglable de manière à pouvoir augmenter ou réduire la valeur du couple d'essuyage en fonction d'au moins un paramètre de fonctionnement du véhicule et en ce que le dispositif d'application du couple complémentaire comporte un actionneur (36) associé à la tête d'entraînement (20) et une pièce de liaison (38) qui relie l'actionneur (36) au bras d'essuie-glace (12).

2. Essuie-glace selon la revendication 1, caractérisé en ce que la pièce de liaison (38) comporte une patte (54) dont une extrémité (58,60) est reliée à l'actionneur (36) de manière à solliciter le bras d'essuie-glace (12) en rotation autour de son axe d'articulation (X-X).

3. Essuie-glace selon la revendication 2, caractérisé en ce que l'actionneur (36) comporte une tige de sortie coulissante (40) qui s'étend selon une direction (Z-Z) sensiblement perpendiculaire à l'axe d'articulation (X-X) du bras d'essuie-glace (12), ladite tige de sortie (40) présentant une extrémité libre (46) comportant deux surfaces opposées (50, 52) qui s'étendent dans des plans perpendiculaires à la tige de sortie (40) et entre lesquelles est reçue l'extrémité (58, 60) de la patte (54).

4. Essuie-glace selon la revendication 3, caractérisé en ce que l'extrémité (58, 60) est reçue avec jeu entre les deux surfaces (50, 52).

5. Essuie-glace selon l'une quelconque des revendications 2 à 4, caractérisé en ce que la patte (54) constitue la première branche d'une pièce de liaison (38) en forme générale de (L) dont la seconde branche (56) est fixée au bras d'essuie-glace (12).

6. Essuie-glace selon l'une quelconque des revendications 2 à 5, caractérisé en ce que la patte (54) est déformable élastiquement.

7. Essuie-glace selon la revendication 6, caractérisé en ce que la patte (54) est à l'état neutre lorsque la valeur du couple complémentaire est nulle.

8. Essuie-glace selon l'une des revendications 6 ou 7 prise en combinaison avec la revendication 6, caractérisé en ce que la pièce de liaison (38) est déformable élastiquement dans la zone de raccordement de ses deux branches (54, 56) de manière à constituer une zone (62) d'articulation de la patte (54) autour d'un axe sensiblement parallèle à l'axe d'articulation (X-X) du bras d'essuie-glace (12) sur la tête d'entraînement (20).

9. Essuie-glace selon l'une quelconque des revendications 2 à 8, caractérisé en ce que l'actionneur est un moteur linéaire (36) tel qu'un vérin à vis.
